# EUROPEAN PATENT SPECIFICATION

(11) **EP 3 006 246 B1**
(45) Date of publication and mention of the grant of the patent: **12.07.2017**
(21) Application number: 14188403.1
(22) Date of filing: 10.10.2014
(51) Int. Cl.: B60K 6/387, F16D 27/00

(54) **A method for adaption of supercharger clutch torque in an internal combustion engine**
Verfahren zur Anpassung eines Laderkupplungsmoments bei einem Verbrennungsmotor
Procédé d'adaptation de couple d'embrayage de suralimentation dans un moteur à combustion interne

(43) Date of publication of application: 13.04.2016
(73) Proprietor: Volvo Car Corporation, 40 531 Göteborg (SE)
(72) Inventor: Nordin, Henrik, 46130 Trollhättan (SE); Svensson, Johan, 411 05 Göteborg (SE)
(74) Representative: Volvo Car Corporation

(56) References cited:
- EP-A1- 1 496 281
- WO-A1-2012/135942
- WO-A1-2014/041992
- DE-U1-202011 051 979

## Description

### TECHNICAL FIELD

The invention relates to a method for adaption of clutch torque in an electromagnetic clutch for an auxiliary rotating unit such as a supercharger or an AC compressor by means of an engine control unit. The engagement of said electromagnetic clutch is achieved by means of a coil control current being applied to an electromagnetic coil which pulls a clutch armature disc. This clutch armature disc is connected to the auxiliary rotary unit into engagement with a clutch rotor which is operatively connected to an internal combustion engine having a crank speed sensor for feeding a crank speed signal to the engine control unit.

### BACKGROUND

It is well known in the art to provide an internal combustion engine with a supercharger driven by a clutch assembly that operates electromagnetically. A supercharger with such a clutch arrangement can operate in a generally satisfactory manner once the clutch is in either the engaged or disengaged state. However, conventional clutch arrangements suffer from certain limitations during transient conditions when the clutch assembly changes from the disengaged to the engaged state, or vice versa. Typically, electromagnetic clutch-driven superchargers are ON-OFF type devices that engage abruptly with little or no slipping of the clutch, which results in an undesirable transient load torque on the engine during engagement of the clutch. Hence, when a conventional electromagnetic clutch is engaged, a resulting surge in engine speed may be perceived by a driver of the vehicle and may be manifested as an undesirable deceleration of the vehicle which negatively affects the overall driveability of the vehicle. A supercharger of this type is described in U.S. Pat. No. 5,078,583 for reference.

Without monitoring speed or torque during supercharger clutch engagement it is difficult to control transferred torque accurately. The electromagnetic clutch has a certain characteristic of dynamic torque (slip torque) versus coil current. However there is a variation in torque from individual part-to-part and over the expected lifetime of the individual clutch which can be quite substantial. It is possible to model nominal expected torque as a function of current and wear but there will still remain a part-to-part variation as well as variation over the expected lifetime of the clutch.

In order to achieve a smooth engagement for an electromagnetic operated supercharger clutch or other electromagnetic operated clutches (such as AC-compressors) with a relatively large speed ratio relative the drive source (i.e. an engine crankshaft) it is important to estimate the transferred torque accurately. For this purpose it is known in the art to implement a speed sensor to monitor speed increase during engagement to accurately estimate transferred torque by calculating speed increase over time for the accelerated inertia. This will drive additional cost to the product because of the need of additional costly sensors. Such a solution is known from German automaker Audi AG in their 3,0l TFSI engine wherein a dedicated extra speed sensor is used to monitor the rotational speed of the supercharger. Another known implementation for achieving smooth clutch engagements is described in U.S. Pat. No. 6,634,344, which uses additional throttle pedal position sensors and related algorithms to achieve smooth engagements of a supercharger.

### SUMMARY

This invention describes an alternative way of accurately estimate the torque by adapting the clutch current-torque model without adding additional costly sensors to the system. The invention thus eliminates the need for extra speed sensors and instead uses the existing crank speed sensor available on modern internal combustion engines.

Consequently, an object of the invention is to provide a method which solves the above-mentioned problems related to prior art and provides a solution which ensures smooth engagement of the auxiliary rotating unit without adding costly additional sensors.

The object is achieved by a method for adaption of clutch torque in an electromagnetic clutch for an auxiliary rotating unit such as a supercharger or an AC compressor by means of an engine control unit. Engagement of said electromagnetic clutch is achieved by means of a coil control current being applied to an electromagnetic coil which pulls a clutch armature disc connected to the auxiliary rotating unit into engagement with a clutch rotor. The clutch rotor is operatively connected to an internal combustion engine which is provided with a crank speed sensor for feeding a crank speed signal to the engine control unit. The invention is especially characterized in that the method comprises the following steps:
- step 1: intermittently performing an adaption engagement of the clutch initiated by the engine control unit under predetermined operational conditions outside of regular operation of the auxiliary rotating unit;
- step 2: recording crank speed signal disturbance data from a disturbance in said crank speed signal following clutch speed synchronization, said crank speed signal disturbance data containing information about actual clutch torque during the adaption engagement;
- step 3: entering said crank speed signal disturbance data into a look-up table or an equation yielding an adaption factor based on a relative comparison between deduced actual clutch torque of the electromagnetic clutch and expected clutch torque for a known nominal electromagnetic clutch;
- step 4: multiplying said adaption factor with a previously stored torque adaption factor yielding a new torque adaption factor (TAF);
- step 5: applying said new torque adaption factor to a nominal clutch torque table yielding an adapted coil control current/actual clutch torque relationship for achieving a smoother engagement of the clutch in the next following clutch engagement; and
- step 6: iterating steps 1 through 5 until the remaining relative error between deduced actual clutch torque and expected nominal clutch torque is reduced to an accepted predetermined level.

In a preferred embodiment of the invention, the method includes:
- recording an actual location in time of a peak in the crank speed signal caused by the point of clutch speed synchronisation between the clutch rotor and the clutch armature disc occurring during said adaption engagement,
- comparing said actual location in time with an reference location in time for clutch speed synchronisation of a known nominal electromagnetic clutch;
- recording a crank speed peak value for said peak during said adaption engagement, and
- determining said torque adaption factor from said look-up table or equation based on the recorded crank speed disturbance data, said adaption factor being defined as a relative factor for the deduced actual torque of the actual electromagnetic clutch compared to expected torque of said nominal electromagnetic clutch.

Furthermore, said accepted predetermined level of the remaining relative error between deduced actual clutch torque and expected nominal clutch torque is below 6% and more preferably below 3%.

Advantageously, the adaption engagement is triggered according to a predetermined schedule which suitably prescribes adaption engagement cycles to be initiated between 100 and 10000 regular operational engagements of the electromagnetic clutch.

The adaption engagement may also be triggered as a result of an imperfect engagement wherein the crank speed signal disturbance data indicates an elevated difference between deduced actual torque and expected clutch torque.

In a preferred embodiment, said auxiliary rotating unit is a supercharger or an air condition compressor for an automotive vehicle.

The invention further comprises a computer program comprising program code means for performing the method steps described above when said program is run on a computer.

Additionally, the invention includes a vehicle comprising a control system using the method described above.

Furthermore, the invention includes a computer readable medium carrying a computer program comprising program code means for performing the method described above when said program is run on a computer.

The invention provides certain advantages over previously known technology, primarily due to the fact that it is an alternative way of accurately estimating the torque by adapting the clutch current torque model without adding costly additional sensors to the system.

The invention can be applied in different types of vehicles, such as cars, trucks, buses and construction equipment as well as in stationary industrial motor installations. Although the invention will be described with respect to an application in the form of a car, the invention is not restricted to this particular type of vehicle, but may be used in other vehicles or engine applications.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.
- Fig. 1: shows a simplified schematic overview of an internal combustion engine provided with electromagnetic clutch for a supercharger controlled by means of an engine control unit which uses the method for adaption of clutch torque according to the present invention.
- Fig. 2: shows a plot of an engagement where the expected torque matches actual torque. A speed peak occurs a certain time after the expected point of synchronization. Hence, the adaption factor equals 1.
- Fig. 3: shows a further plot of an engagement where actual torque is higher than expected torque. The speed peak then occurs earlier than expected. Hence, the adaption factor is higher than 1.
- Fig. 4: shows another plot of an engagement where actual torque is lower than expected torque. The speed peak occurs later than expected. Hence, the adaption factor is lesser than 1.
- Fig. 5: is a plot showing a scatter band of dynamic torque variation as a function of coil control current for a typical electromagnetic clutch. A trend-line for nominal clutch torque is shown, above which the adaption factor is higher than 1 and below which the adaption factor is lesser than 1.

### DETAILED DESCRIPTION OF EXAMPLE EMBODIMENTS OF THE INVENTION

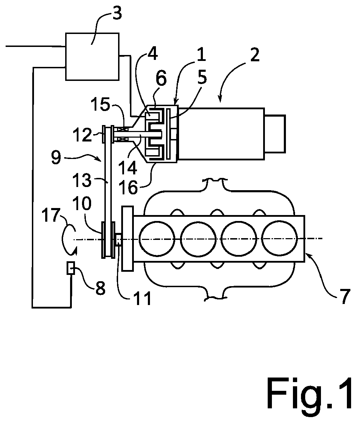

The invention will now be described with reference to embodiments of the invention and with reference to the appended drawings. With initial reference to Fig. 1, this figure shows a schematic overview of a four-cylinder internal combustion engine 7 which is provided with an electromagnetic clutch 1 for an auxiliary rotating unit 2, here in the form of a supercharger controlled by means of an engine control unit 3 which uses the method for adaption of clutch torque according to the present invention. In the following description, the auxiliary rotating unit will hence be also be referred to as a supercharger 2 since it reflects the most common application of the invention It should be noted that the auxiliary rotating unit 2 may alternatively be of any type of positive displacement fluid pump, including Roots-type rotary blowers, screw-type air pumps, and any other similar devices for use in vehicle applications or in stationary industrial applications.

As further shown in the Fig. 1, the electromagnetic clutch 1 is driven by the internal combustion engine 7 via a belt drive assembly 9 including a drive pulley 10 rigidly connected to a crank shaft 11. The drive pulley 10 is in turn connected to an input pulley 12 via a belt 13. The input pulley 12 is in turn fixedly attached to a clutch input shaft 14 rotationally mounted by bearings 15 in a non-rotating clutch housing 16. A clutch rotor 6 with frictional coating is rigidly attached to the input shaft 14. A clutch armature disc 5 is positioned opposite to the clutch rotor 6 and rigidly connected to the auxiliary rotating unit 2. Engagement of the electromagnetic clutch 1 is achieved by means of a coil control current being applied to an electromagnetic coil 4 which pulls the clutch armature disc 5 into engagement with a clutch rotor 6.

When disengaged, the clutch armature disc 5 is pulled away from the clutch rotor 6 by a spring (not shown in this simplified view). When current is applied through the electromagnetic coil 4 the clutch armature disc 5 is pulled towards the clutch rotor 6. By reducing current after disc-rotor contact the supercharger 2 can be accelerated slower by gradually reducing the torque impact on the crankshaft 11.

Current through the electromagnetic coil 4 is controlled with a PWM (Pulse Width Modulation) signal. Coil control current can be modeled based on system voltage, PWM signal and coil resistance/impedance or measured using a feedback closed loop controller. In this way, the electromagnetic clutch 1 may be actuated by the engine control unit 3 applying a modulated coil current in such a way as to allow a controlled slippage to progressively engage or release the electromagnetic clutch 1 so that undesirable disturbances in engine torque can be avoided. A crank speed sensor 8 measures the rotational speed of the crank shaft 11 - indicated here by the curved arrow 17 - and continually sends this data to the engine control unit 3. It should be noted that the method according to the invention uses the signal from the existing crank speed sensor 8 of the internal combustion engine 7 and thus eliminates the need for adding extra speed sensors for controlling the electromagnetic clutch. This saves cost and weight - both important factors in the automotive industry.

The method of clutch torque adaption is to monitor disturbance in engine speed signal during an adaption engagement that occurs outside regular operation, i.e. not when the driver demands extra torque for overtaking or other accelerations. This adaption engagement is performed at a pre-determined schedule, for example every 100-10000 engagement, depending on part-to-part variation and wear or triggered by "bad" or imperfect engagements. By "imperfect engagement" is meant when the crank speed signal disturbance data indicates an elevated difference between deduced actual torque and expected clutch torque.

The adaption engagements also have certain pre-conditions to be allowed by the engine control unit 3. In a vehicle application this can be engine speed- and load limitations and that smooth driving conditions are required without the supercharger 2 being engaged before the adaption takes place, for example when the driver maintains a steady moderate speed of 70 kilometers per hour on a level road for a relatively long time. If engine load is limited at the time of the adaption engagement it is possible to build up a certain torque reserve by retarding ignition angle before the engagement so that the engagement becomes smooth and not noticeable to the driver.

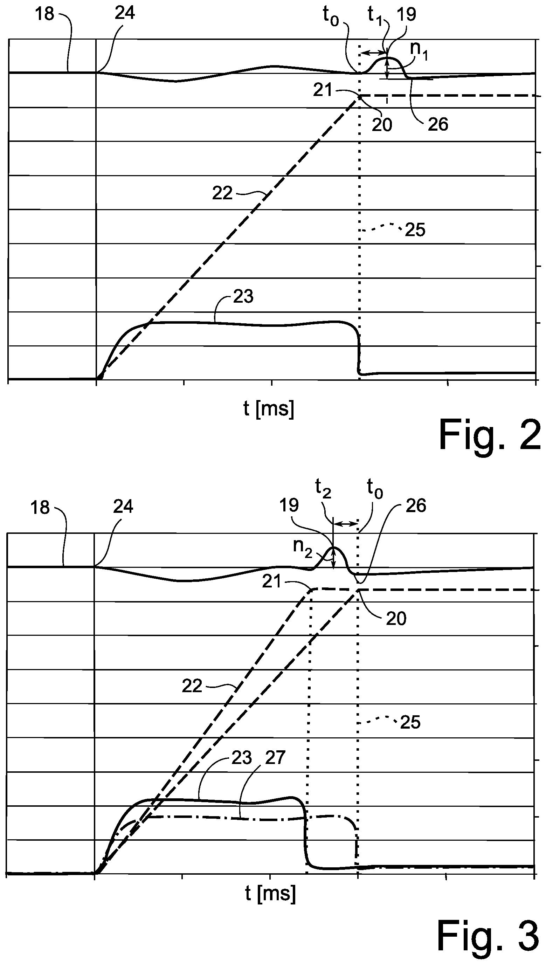

During an adaption engagement a software algorithm executed by the engine control unit 3 monitors pre-conditions and the engagement and evaluates the results. The location in time and maximum value of the engine speed peak 19 or minimum value of the engine speed dip 26 (taken from engine crank speed sensor 8) is caused by a point of clutch speed synchronization and contains information of actual clutch torque, as will be further described with reference to figures 2-4 below. The speed peak 19 occurs a certain time after actual clutch speed synchronization and is caused by the sudden reduction in clutch torque when the clutch armature disc speed is synchronized with the rotor speed. The dynamic torque is then rapidly reduced and only friction torque remains. Retarding spark will reduce this speed peak if torque is estimated accurately. The following description will focus on the peak detection logic.

Hence, in Fig. 2, a plot is shown of an engagement where the expected torque of a nominal electromagnetic clutch matches actual torque of the actual clutch 1. The uppermost curve 18 in the plot shows the crank speed signal in rpm (rotations per minute) as recorded by the crank speed sensor 8 (See Fig. 1), plotted against time. A speed peak 19 occurs at a certain location in time t₁ after a reference time to at the expected point of synchronization 20 between the clutch rotor 6 and the clutch armature disc 5 (see Fig. 1). This peak 19 is caused by an actual point of clutch speed synchronisation 21 occurring during said adaption engagement. The clutch speed, or more specifically the rotational speed of the clutch armature disc 5 and the supercharger 2 (see Fig. 1), is shown as the dash-dotted line 22. The lower curve 23 shows the actual clutch torque plotted over time during a typical adaption engagement of the electromagnetic clutch 1, from the start 24 of the application of coil current to the coil 4 (see Fig. 1) to the expected point of synchronization 20. A vertical dotted line 25 further illustrates the position in time of the expected point of synchronization 20 of a nominal electromagnetic clutch. It is important to estimate the transferred torque accurately to match torque reserve during engagement and synchronization if applied.

According to the invention, the engine control unit 3 records crank speed signal disturbance data from a disturbance in the crank speed signal following clutch speed synchronization shown as the disturbed area of the plot at and adjacent to the peak 19 in the crank speed signal during an adaption engagement. This crank speed signal disturbance data contains information about actual clutch torque during the adaption engagement which is compared to expected torque of a known nominal electromagnetic clutch. A typical adaption engagement may take place during 500-600 milliseconds in time including torque reserve build-up, engagement, collecting engine speed data and release of the clutch. The amplitude n₁ of the peak 19 in crank speed signal is also recorded by the engine control unit 3. More particularly, the method includes:
- recording an actual location in time t₁, t₂, t₃ of a peak 19 in the crank speed signal caused by the point of clutch speed synchronisation between the clutch rotor 6 and the clutch armature disc 5 occurring during said adaption engagement,
- comparing said actual location in time t₁, t₂, t₃ with a reference location in time t₀ for clutch speed synchronisation of a known nominal electromagnetic clutch;
- recording a crank speed peak value n₁, n₂, n₃ for said peak 19 during said adaption engagement, and
- determining an adaption factor from said look-up table or equation based on the recorded crank speed disturbance data. The adaption factor is defined as a relative factor for the deduced actual torque of the actual electromagnetic clutch 1 compared to expected torque of said nominal electromagnetic clutch.

Hence, in Fig. 2 we see a case where expected torque matches actual torque as the actual (measured) point of synchronisation 20 coincides with the expected torque of the nominal clutch. This means that the adaption factor is 1.

In an alternative embodiment of the invention, the recording of crank speed disturbance data further includes determining a location in time and a minimum value of a dip 26 in the crank speed signal during said adaption engagement. Just like the previously mentioned peak 19, the dip 26 is caused by said point of clutch speed synchronisation 21 occurring during said adaption engagement .In this alternative embodiment, the position in time of the dip and the minimum value of the dip 26 are used in the same way as previously described with reference to the peak 19 in order to obtain the adaption factor.

In Fig. 3, the plot shows a case where the measured and recorded actual torque 23 is higher than the expected torque of the nominal clutch, the latter indicated by the dash-dotted curve 27. As seen in the figure, the crank speed peak 19 here occurs earlier than expected and the adaption factor is then higher than 1. The speed peak 19 occurs at a location in time t₂ *before* the expected point of synchronization 20. The amplitude n₂ of the peak 19 in crank speed signal is also recorded by the engine control unit 3.

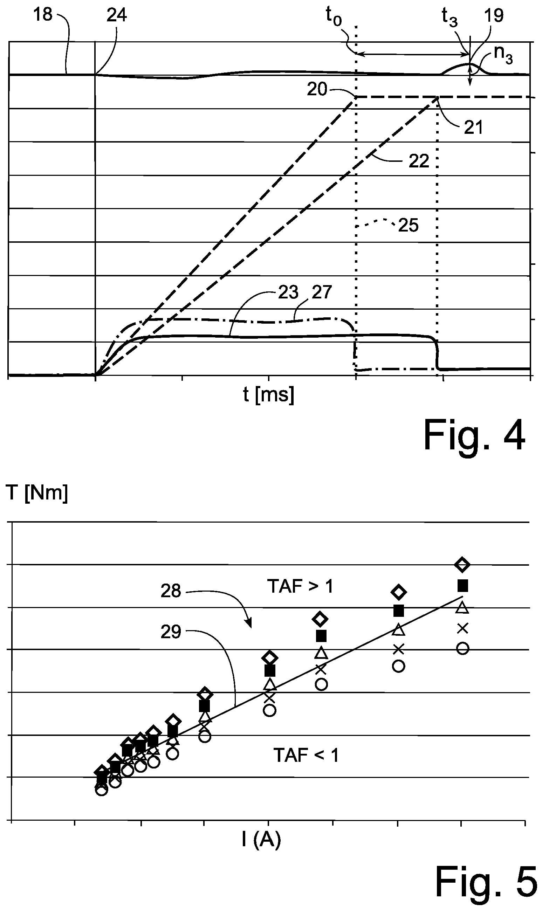

In Fig. 4, the plot shows a case where the measured and recorded actual torque 23 is lower than the expected torque of the nominal clutch, the latter indicated by the dash-dotted curve 27. As seen in the figure, the crank speed peak 19 here occurs later than expected and the adaption factor is then lesser than 1. The crank speed peak 19 occurs at a location in time t₃ *after* the expected point of synchronization 20. The amplitude n₃ of the peak 19 in crank speed signal is also recorded by the engine control unit 3.

The method according to the invention will now be described in a continuous sequence involving five main steps. Hence step 1 consists of intermittently performing an adaption engagement of the electromagnetic clutch 1 initiated by the engine control unit 3. An important aspect of the invention is that the adaption engagement is only performed under predetermined operational conditions outside of regular operation of the auxiliary rotating unit 2.

Step 2 consists of recording crank speed signal disturbance data from a disturbance in said crank speed signal following clutch speed synchronization. The crank speed signal disturbance data contains information about actual clutch torque during the adaption engagement.

Step 3 consists of entering the crank speed signal disturbance data into a look-up table or an equation yielding an adaption factor based on a relative comparison between deduced actual clutch torque and expected clutch torque for a known nominal electromagnetic clutch.

Step 4 consists of multiplying said adaption factor with a previously stored torque adaption factor (TAF) yielding a new torque adaption factor (TAF). This torque adaption factor is initially set to 1 as a default or reset value.

Step 5 consists of applying said new torque adaption factor (TAF) to a nominal clutch torque table yielding an adapted coil control current/actual clutch torque relationship for achieving a smoother engagement of the clutch in the next following clutch engagement; and

Step 6 consists of iterating steps 1 through 5 until the remaining relative error between deduced actual clutch torque and expected nominal clutch torque is reduced to an accepted predetermined level of at least below 6% and more preferably below 3%. The adaption is iterated in order to eliminate any influence from other external disturbances in the crank speed signal caused, for example, by a sudden bump in an uneven road surface or similar.

In Fig. 4 a plot shows a scatter band 28 of dynamic torque variation as a function of coil control current for five individual electromagnetic clutches 1. The scattered results between different individual clutches are indicated in five series shown as circles, crosses, boxes and diamonds, respectively and illustrate the variations in properties due to individual tolerance deviations in manufacture and the degree of wear of each individual clutch. A trend-line 29 for nominal clutch torque is shown, above which the adaption factor is higher than 1 and below which the adaption factor is lesser than 1.

The invention also includes a computer program comprising program code means for performing the method steps 1 through 5 described above when the program is run on a computer in the engine control unit 3. Furthermore, the invention includes a computer readable medium carrying a computer program comprising program code means for performing the method when the program is run on a computer in the engine control unit 3. Finally, the invention also includes a vehicle comprising a control system using the method.as described above.

In an alternative embodiment of the invention the torque adaption factor (TAF) could instead be divided and the factor would then switch to <1 for a higher torque and >1 for lower torque. But in the described embodiment it is a multiplicative factor. As mentioned above, the relationship between speed peak/dip properties and adaption factor is found in a look-up table or an equation that translates the data into a torque adaption factor (TAF). This has to be calibrated by enforcing known errors into the system to populate the table or equations. Coil control current request for a given requested torque is then increased or reduced as needed for the following engagements.

It is to be understood that the present invention is not limited to the embodiments described above and illustrated in the drawings and a skilled person will recognize that many changes and modifications may be made within the scope of the appended claims.

## Claims

1. A method for adaption of clutch torque in an electromagnetic clutch (1) for an auxiliary rotating unit (2) such as a supercharger or an AC compressor by means of an engine control unit (3), wherein engagement of said electromagnetic clutch (1) is achieved by means of a coil control current being applied to an electromagnetic coil (4) which pulls a clutch armature disc (5) connected to the auxiliary rotating unit (2) into engagement with a clutch rotor (6) operatively connected to an internal combustion engine (7) which is provided with a crank speed sensor (8) for feeding a crank speed signal to the engine control unit (3), **characterized in that** said method comprises the following steps:
- step 1: intermittently performing an adaption engagement of the clutch (1) initiated by the engine control unit (3) under predetermined operational conditions outside of regular operation of the auxiliary rotating unit (2);
- step 2: recording crank speed signal disturbance data from a disturbance in said crank speed signal following clutch speed synchronization by recording an actual location in time (t₁, t₂, t₃) of a peak (19) in the crank speed signal caused by the point of clutch speed synchronisation between the clutch rotor (6) and the clutch armature disc (5) occurring during said adaption engagement and comparing said actual location in time (t₁, t₂, t₃) with a reference location in time (t₀) for clutch speed synchronisation of a known nominal electromagnetic clutch and recording a crank speed peak value (n₁, n₂, n₃) for said peak (19) during said adaption engagement, said crank speed signal disturbance data containing information about actual clutch torque during the adaption engagement;
- step 3: entering said crank speed signal disturbance data into a look-up table or an equation yielding an adaption factor based on a relative comparison between deduced actual clutch torque of the electromagnetic clutch (1) and expected clutch torque for a known nominal electromagnetic clutch;
- step 4: multiplying said adaption factor with a previously stored torque adaption factor (TAF) yielding a new torque adaption factor (TAF);
- step 5: applying said new torque adaption factor (TAF) to a nominal clutch torque table yielding an adapted coil control current/actual clutch torque relationship for achieving a smoother engagement of the clutch in the next following clutch engagement; and
- step 6: iterating steps 1 through 5 until the remaining relative error between deduced actual clutch torque and expected nominal clutch torque is reduced to an accepted predetermined level.

2. Method according to claim 1, **characterized in that** said accepted predetermined level of the remaining relative error between deduced actual clutch torque and expected nominal clutch torque is below 6% and more preferably below 3%.

3. Method according to any one of the preceding claims, **characterized in that** that said adaption engagement is triggered according to a predetermined schedule which prescribes adaption engagement cycles to be initiated between 100 and 10000 regular operational engagements of the electromagnetic clutch (1).

4. Method according to any one of the preceding claims, **characterized in that** that said adaption engagement is triggered as a result of an imperfect engagement wherein the crank speed signal disturbance data indicates an elevated difference between deduced actual torque and expected clutch torque.

5. Method according to any one of the preceding claims, **characterized in that** that said auxiliary rotary unit (2) is a supercharger or an air condition compressor for an automotive vehicle.

6. A computer program comprising program code means for performing the method steps of any of claims 1-5 when said program is run on a computer.

7. A vehicle comprising a control system using the method described in any one of claims 1-5.

8. A computer readable medium carrying a computer program comprising program code means for performing the method according to of any of claims 1-5 when said program is run on a computer.

## Patentansprüche

1. Verfahren zur Anpassung eines Kupplungsmoments in einer elektromagnetischen Kupplung (1) für eine rotierende Hilfseinheit (2) wie etwa einen Lader oder einen Klimaanlagen-Kompressor mittels einer Motorsteuereinheit (3), wobei ein Einrücken der elektromagnetischen Kupplung (1) mittels eines Spulensteuerstroms erreicht wird, der an eine elektromagnetische Spule (4) angelegt wird, welche eine Kupplungsankerscheibe (5), die mit der rotierenden Hilfseinheit (2) verbunden ist, in Eingriff mit einem Kupplungsrotor (6) zieht, der mit einem Verbrennungsmotor (7) in Wirkverbindung steht, welcher mit einem Kurbelwellen-Drehzahlsensor (8) zum Zuführen eines Kurbelwellen-Drehzahlsignals zu der Motorsteuereinheit (3) versehen ist,
**dadurch gekennzeichnet, dass** das Verfahren die folgenden Schritte umfasst:
- Schritt 1: intermittierendes Durchführen einer von der Motorsteuereinheit (3) ausgelösten Anpassungs-Einrückung der Kupplung (1) unter vorbestimmten Betriebsbedingungen außerhalb des regulären Betriebs der rotierenden Hilfseinheit (2);
- Schritt 2: Aufzeichnen von Störungsdaten des Kurbelwellen-Drehzahlsignals aus einer Störung dieses Kurbelwellen-Drehzahlsignals, die auf die Kupplungsdrehzahlsynchronisation folgt, durch Aufzeichnen eines tatsächlichen Zeitpunkts (t₁, t₂, t₃) eines Peaks (19) im Kurbelwellen-Drehzahlsignal, das durch den Punkt der während der Anpassungs-Einrückung erfolgenden Kupplungsdrehzahlsynchronisation zwischen dem Kupplungsrotor (6) und der Kupplungsankerscheibe (5) verursacht wird, und Vergleichen dieses tatsächlichen Zeitpunkts (t₁, t₂, t₃) mit einem Referenzzeitpunkt (t₀) für die Kupplungsdrehzahlsynchronisation einer bekannten nominellen elektromagnetischen Kupplung und Aufzeichnen eines Kurbelwellendrehzahl-Peakwertes (n₁, n₂, n₃) für das Peak (19) während der Anpassungs-Einrückung, wobei die Störungsdaten des Kurbelwellen-Drehzahlsignals Informationen über das tatsächliche Kupplungsmoment während der Anpassungs-Einrückung enthalten;
- Schritt 3: Eingeben der Störungsdaten des Kurbelwellen-Drehzahlsignals in eine Nachschlagetabelle oder eine Gleichung, die einen Anpassungsfaktor liefert, der auf einem relativen Vergleich zwischen abgeleitetem tatsächlichem Kupplungsmoment der elektromagnetischen Kupplung (1) und erwartetem Kupplungsmoment für eine bekannte nominelle elektromagnetische Kupplung basiert;
- Schritt 4: Multiplizieren des Anpassungsfaktors mit einem zuvor gespeicherten Drehmoment-Anpassungsfaktor (TAF), was einen neuen Drehmoment-Anpassungsfaktor (TAF) liefert;
- Schritt 5: Anwenden des neuen Drehmoment-Anpassungsfaktors (TAF) auf eine Tabelle von Nenn-Kupplungsmomenten, die eine angepasste Beziehung zwischen Spulensteuerstrom und tatsächlichem Kupplungsmoment liefert, zum Erzielen einer sanfteren Einrückung der Kupplung bei der nächstfolgenden Kupplungseinrückung; und
- Schritt 6: Iterieren der Schritte 1 bis 5, bis der verbleibende relative Fehler zwischen abgeleitetem tatsächlichem Kupplungsmoment und erwartetem Nenn-Kupplungsmoment auf eine zulässige vorbestimmte Größe verringert worden ist.

2. Verfahren nach Anspruch 1, **dadurch gekennzeichnet, dass** die zulässige vorbestimmte Größe des verbleibenden relativen Fehlers zwischen abgeleitetem tatsächlichem Kupplungsmoment und erwartetem Nenn-Kupplungsmoment unter 6 % und, stärker bevorzugt, unter 3 % liegt.

3. Verfahren nach einem der vorhergehenden Ansprüche, **dadurch gekennzeichnet, dass** die Anpassungs-Einrückung gemäß einem vorbestimmten Zeitplan ausgelöst wird, welcher vorschreibt, dass Anpassungs-Einrückungszyklen nach jeweils 100 bis 10000 regulären betriebsbedingten Einrückungen der elektromagnetischen Kupplung (1) ausgelöst werden.

4. Verfahren nach einem der vorhergehenden Ansprüche, **dadurch gekennzeichnet, dass** die Anpassungs-Einrückung im Ergebnis einer unvollkommenen Einrückung ausgelöst wird, bei der die Störungsdaten des Kurbelwellen-Drehzahlsignals eine erhöhte Differenz zwischen abgeleitetem tatsächlichem Moment und erwartetem Kupplungsmoment anzeigen.

5. Verfahren nach einem der vorhergehenden Ansprüche, **dadurch gekennzeichnet, dass** die rotierende Hilfseinheit (2) ein Lader oder ein Klimaanlagen-Kompressor für ein Kraftfahrzeug ist.

6. Computerprogramm, welches Programmcodemittel zum Ausführen der Verfahrensschritte nach einem der Ansprüche 1 bis 5, wenn das Programm auf einem Computer ausgeführt wird, umfasst.

7. Fahrzeug, welches ein Steuerungssystem umfasst, welches das in einem der Ansprüche 1-5 beschriebene Verfahren verwendet.

8. Computerlesbares Medium, welches ein Computerprogramm trägt, das Programmcodemittel zum Ausführen des Verfahrens nach einem der Ansprüche 1 bis 5, wenn das Programm auf einem Computer ausgeführt wird, umfasst.

## Revendications

1. Procédé d'adaptation de couple d'embrayage dans un embrayage électromagnétique (1) pour une unité rotative auxiliaire (2) telle qu'un compresseur de suralimentation ou un compresseur de climatisation au moyen d'un calculateur moteur (3), l'enclenchement dudit embrayage électromagnétique (1) s'effectuant au moyen d'un courant de commande de bobine appliqué à une bobine électromagnétique (4) qui amène un disque induit (5) d'embrayage relié à l'unité rotative auxiliaire (2) en enclenchement avec un rotor (6) d'embrayage relié fonctionnellement à un moteur à combustion interne (7) pourvu d'un capteur de vitesse (8) de vilebrequin destiné à fournir un signal de vitesse de vilebrequin au calculateur moteur (3),
ledit procédé étant **caractérisé en ce qu'**il comprend les étapes suivantes :
- étape 1 : réalisation par intermittence d'un enclenchement d'adaptation de l'embrayage (1) lancé par le calculateur moteur (3) dans des conditions de fonctionnement prédéfinies en dehors d'un fonctionnement ordinaire de l'unité rotative auxiliaire (2) ;
- étape 2 : enregistrement de données de perturbation de signal de vitesse de vilebrequin issues d'une perturbation dans ledit signal de vitesse de vilebrequin à la suite d'une synchronisation de vitesse d'embrayage par enregistrement d'une position réelle dans le temps (t₁, t₂, t₃) d'un pic (19) dans le signal de vitesse de vilebrequin dû au point de synchronisation de vitesse d'embrayage entre le rotor (6) d'embrayage et le disque induit (5) d'embrayage survenant au cours dudit enclenchement d'adaptation et comparaison de ladite position dans le temps (t₁, t₂, t₃) à une position de référence dans le temps (t₀) pour la synchronisation de vitesse d'embrayage d'un embrayage électromagnétique nominal connu et enregistrement d'une valeur de pic de vitesse de vilebrequin (n₁, n₂, n₃) pour ledit pic (19) au cours dudit enclenchement d'adaptation, lesdites données de perturbation de signal de vitesse de vilebrequin contenant des informations relatives au couple d'embrayage réel au cours de l'enclenchement d'adaptation ;
- étape 3 : entrée desdites données de perturbation de signal de vitesse de vilebrequin dans une table de correspondance ou dans une équation produisant un facteur d'adaptation basé sur une comparaison relative entre le couple d'embrayage réel déduit de l'embrayage électromagnétique (1) et le couple d'embrayage attendu pour un embrayage électromagnétique nominal connu ;
- étape 4 : multiplication dudit facteur d'adaptation par un facteur d'adaptation de couple (TAF) préalablement mémorisé produisant un nouveau facteur d'adaptation de couple (TAF) ;
- étape 5 : application dudit nouveau facteur d'adaptation de couple (TAF) à une table de couple d'embrayage nominal produisant une relation courant de commande de bobine / couple d'embrayage réel adaptée pour l'obtention d'un enclenchement plus progressif de l'embrayage lors de l'enclenchement d'embrayage suivant ; et
- étape 6 : itération des étapes 1 à 5 jusqu'à réduction de l'erreur relative restante entre le couple d'embrayage réel déduit et le couple d'embrayage nominal attendu à un niveau prédéfini accepté.

2. Procédé selon la revendication 1, **caractérisé en ce que** ledit niveau prédéfini accepté de l'erreur relative restante entre le couple d'embrayage réel déduit et le couple d'embrayage nominal attendu est inférieur à 6 % et, de préférence encore, inférieur à 3 %.

3. Procédé selon l'une quelconque des revendications précédentes, **caractérisé en ce que** ledit enclenchement d'adaptation est déclenché selon un échéancier prédéfini qui préconise le lancement de cycles d'enclenchement d'adaptation entre 100 et 10000 enclenchements fonctionnels ordinaires de l'embrayage électromagnétique (1).

4. Procédé selon l'une quelconque des revendications précédentes, **caractérisé en ce que** ledit enclenchement d'adaptation est déclenché à la suite d'un enclenchement imparfait pour lequel les données de perturbation de signal de vitesse de vilebrequin indiquent une différence élevée entre le couple réel déduit et le couple d'embrayage attendu.

5. Procédé selon l'une quelconque des revendications précédentes, **caractérisé en ce que** ladite unité rotative auxiliaire (2) est un compresseur de suralimentation ou un compresseur de climatisation pour un véhicule automobile.

6. Programme d'ordinateur comprenant des moyens formant code de programme permettant la réalisation des étapes du procédé selon l'une quelconque des revendications 1 à 5 lors de l'exécution dudit programme sur un ordinateur.

7. Véhicule comprenant un système de commande faisant appel au procédé décrit dans l'une quelconque des revendications 1 à 5.

8. Support lisible par ordinateur portant un programme d'ordinateur comprenant des moyens formant code de programme permettant la réalisation du procédé selon l'une quelconque des revendications 1 à 5 lors de l'exécution dudit programme sur un ordinateur.
